Europäisches Patentamt

European Patent Office

Office européen des brevets

(19)

(11) Publication number : **0 307 370 B1**

(12) **EUROPEAN PATENT SPECIFICATION**

(45) Date of publication of patent specification :
19.02.92 Bulletin 92/08

(51) Int. Cl.⁵ : **B62D 27/06,** B62D 33/04,
B60J 7/10, B60P 7/04

(21) Application number : 88830352.6

(22) Date of filing : 30.08.88

(54) A device for connecting the adjacent ends of two sections of a longitudinal member of a demountable framework for supporting the tarpaulin of the body of a goods vehicle.

(30) Priority : 10.09.87 IT 5364087 U

(43) Date of publication of application :
15.03.89 Bulletin 89/11

(45) Publication of the grant of the patent :
19.02.92 Bulletin 92/08

(84) Designated Contracting States :
AT BE DE FR GB IT LU NL SE

(56) References cited :
DE-A- 2 728 450
DE-A- 3 148 877
FR-A- 1 388 462
US-A- 2 741 507
US-A- 3 894 766

(73) Proprietor : VIBERTI VEICOLI INDUSTRIALI
S.r.l.
Viale G. Matteotti 99
I-10042 Nichelino (Torino) (IT)

(72) Inventor : Nobili, Roberto
Via Giorgio Vecco, 6
I-10098 Rivoli (Torino) (IT)

(74) Representative : Saconney, Piero et al
c/o JACOBACCI-CASETTA & PERANI S.p.A.
Via Alfieri, 17
I-10121 Torino (IT)

EP 0 307 370 B1

Jouve, 18, rue Saint-Denis, 75001 PARIS

## Description

The present invention relates to a device for connecting the adjacent ends of two sections of a longitudinal member of a demountable framework for supporting the tarpaulin of the body of a goods vehicle, in which the two sections are supported by removable intermediate uprights and the remote ends of the two sections are supported by end uprights of the framework.

A demountable framework of this kind is known for example from FR-A-1 388 462.

The device according to the invention has been developed for application to road-semitrailers but can also be applied to other vehicles, including railway cars and containers.

Frameworks of the type concerned comprise, on each side of the vehicle, a series of removable uprights for supporting the corresponding longitudinal member, also known as an "architrave". The two longitudinal members in turn support a series of removable transverse ribs. Each longitudinal member is usually divided into two sections for the sole purpose of making it easier to assemble and dismantle. In the case of a semitrailer, for example, a longitudinal member in a single piece with a length of the order of 12 metres would be completely unmanageable, whilst two sections of a length of the order of 6 metres can be handled quite easily, even by just one person.

In the assembled framework, the adjacent ends of the two sections of each longitudinal member are connected, according to known solutions, by means of a fixed joint and are held together by means of a removable bolt or a toggle bolt. The joint is situated in correspondence with or in the immediate vicinity of a central intermediate upright.

It frequently happens that the load platform of a vehicle such as a semitrailer or a railway car must be made accessible along its whole length for loading and unloading operations. One example is the loading of bundles of metal strapping having a unit length of 12 metres. In such a case, lateral access to the load platform along its whole length is achieved by folding down all the sideboards, folding the corresponding side flap of the tarpaulin onto the top and removing all the uprights. Under these conditions, the longitudinal member flexes under its own weight, that of the ribs, and that of the whole of one lateral half of the tarpaulin, and bends by a not-inconsiderable amount (of the order of some decimetres). The lowering of the longitudinal member thus reduces the useful height of the loading space by an undesirable amount just when, during loading operations, one would wish to have the maximum loading height.

The object of the invention is to produce a connecting device of the type mentioned at the beginning, which eliminates this problem.

According to the present invention, this object is achieved by means of a connecting device characterised in that the adjacent ends of the two sections of the longitudinal member are provided with lower mutual engagement means such as to define a hinge with a horizontal axis between the two sections, and are provided with upper adjustable separating means which enable the longitudinal member to be prestressed with an upward flexion centred on the hinge so as to compensate for the downward flexion caused by the weight bearing on the longitudinal member when the latter is supported solely by the end uprights.

By virtue of this concept, the longitudinal member does not drop below the maximum permissible height of the loading space in the absence of the intermediate uprights, enabling full use to be made of the useful space.

The fact that the separating means can be adjusted enables the user to adjust the flexion with which it is prestressed to the most suitable value so that the longitudinal member is not bent when it is supported solely by the end uprights and to correct this adjustment whenever it is made necessary by the settling of the framework which takes place with the passage of time.

The subject of the invention will become clearer from a reading of the detailed description which follows with reference to the appended drawings, provided by way of non-limiting example, in which:

Figure 1 is a side elevational view of a semitrailer,

Figure 2 is a perspective view from within of the part enclosed in the circle II of Figure 1, which includes a connecting device according to the invention,

Figure 3 is a side elevational view of the adjacent end regions of two sections of a longitudinal member including a connecting device according to the invention in the disconnected condition,

Figure 4 is an end view of one of the sections of the longitudinal member taken on the arrow IV of Figure 3.

Figure 5 is a view similar to Figure 3, with two sections of a longitudinal member in the course of connection, and

Figure 6 is a view similar to Figure 3 with the two longitudinal members connected.

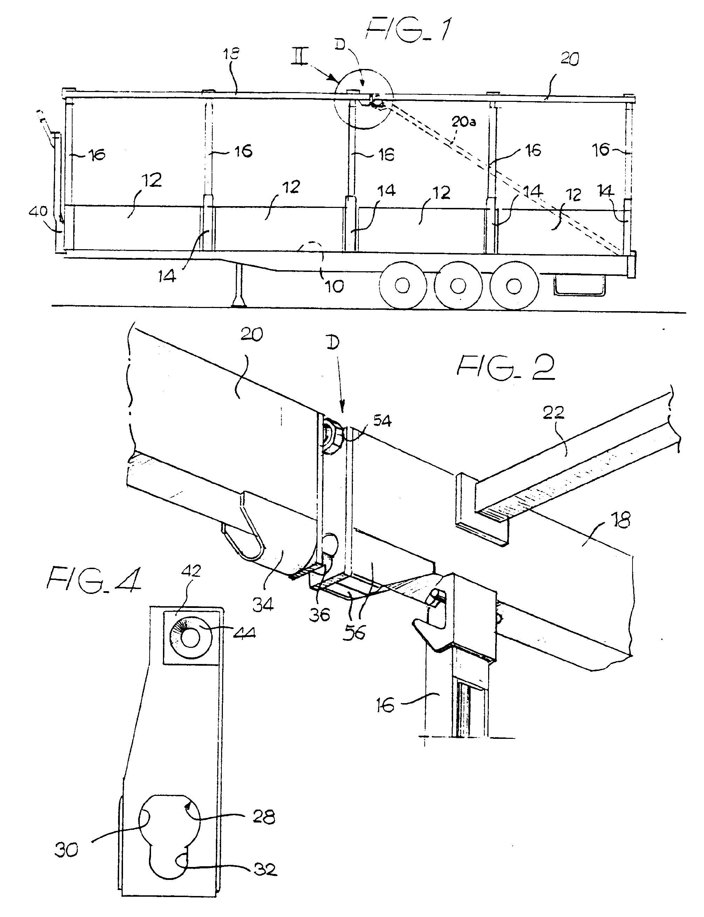

With reference to Figure 1, a road-semitrailer includes a load platform 10 flanked by sideboards 12 which can be folded down and which are retained, in known manner, by folding stanchions 14.

With reference to Figures 1 and 2, respective removable uprights 16 of known type are associated with the stanchions 14 and form part of the framework for supporting a tarpaulin (not shown).

On each side of the vehicle, the series of uprights 16 supports a longitudinal member constituted by two sections 18 and 20. The longitudinal members 18 and 20 in turn support a series of removable transverse ribs, one of which is partially visible at 22 in Figure 2.

The adjacent ends of the two sections 18 and 20 of each longitudinal member are joined by a connection device according to the invention, indicated D in Figures 1 and 2, which will now be described in detail with reference to Figures 2 to 6.

As can be seen in Figures 1 and 2, the connecting device D interconnects the two sections 18 and 20 of the longitudinal member adjacent a central upright 16. The upper end of the latter is engaged in known manner with the section of the longitudinal member indicated 18, which supports the other section 20 by means of the connecting device D.

Respective frontal plates 24 and 26 are welded to the adjacent ends of the two sections 18 and 20.

The two sections 18 and 20 are provided with lower mutual engagement means: on one hand, the frontal plate 24 of the section 18 has an essentially keyhole-shaped lower aperture 28 (Figure 4) with an enlarged upper part 30 and a narrower lower part 32. On the other hand, the end of the section 20 carries a cradle 34 which is welded beneath it and within which the stem 36 of a mushroom-shaped appendage, generally indicated 38, is welded. This appendage 38 projects longitudinally beneath the frontal plate 26 and has an essentially conical engagement head 40 which is wider than the stem 36 and offset downwardly relative thereto. The dimensions of the head 40 are such that it can pass through the enlarged part 30 of the aperture 28, whilst the dimensions of the stem 38 are such that it can be housed in the narrow lower part 32 of the aperture 28.

The adjacent ends of the two sections 18 and 20 are provided with adjustable separating means: on one hand, the section 18 includes, behind the frontal plate 24, a bush 42 with a conical seat 44 which opens onto the plate 24. On the other hand, a nut 46 or an equivalent threaded element is welded within the section 20 behind the plate 26. An adjustment member, generally indicated 48, is associated with the nut 46. The adjustment member 48 includes a threaded shank 50 which is screwed into the nut 46, and a head 52 in the shape of a conical pin whose taper corresponds to that of the conical seat 44. At the base of the head 52, a collar 54 in the form of a hexagonal nut is formed on the adjustment member 48.

The operation of the connecting device illustrated and further details thereof will become clear from the following description in which it is assumed that, to start with, the section 18 of the longitudinal member is already installed as in Figure 1 and the section 20 of the longitudinal member is not yet installed.

In order to install the section 20, whilst its end which is on the right in Figure 1 is still on the load platform 10 of the vehicle, its left-hand end is raised, inclined as shown by the broken lines at 20a in Figure 1, until the engagement head 40 fits into the enlarged part 30 of the aperture 28, as indicated by the arrow A in Figure 5. When the head 40 has passed through the aperture, the stem 36 is allowed to fall into the narrow part 32, thus engaging the section 20 with the section 18. The right-hand end of the section 20 is then raised so that it comes to rest on the upright 16 at the rear end of the vehicle. During this movement, indicated by the arrow B in Figure 5, the section 20 hinges on the hinging means constituted by the mushroom-shaped appendage 38 and the aperture 28, and the conical head 52 of the adjustment member 48 is inserted like a pin in the conical seat 44, as indicated by the arrow C in Figure 5. The connection of the two sections 18 and 20 is thus complete.

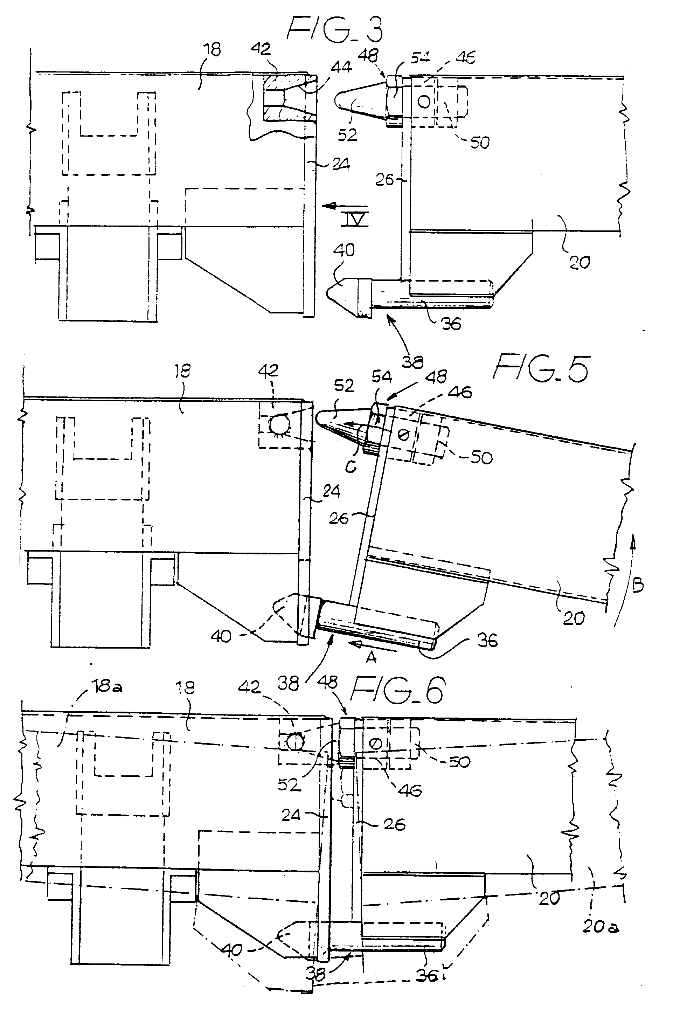

As can be seen in Figure 6, amongst others, the head 40 of the appendage 38 is enclosed between two protective cheeks 56 in the form of gusset plates welded to the lower face of the section 18.

In the absence of the uprights 16, once the connection between the two sections 18 and 20 is established, an obtuse angle is formed between them, as shown by the chain lines indicated 18a and 20a in Figure 6. In other words, without the intermediate supporting uprights, the longitudinal member 18-20 bends or sags more or less like conventional longitudinal members.

As can be seen, the hexagonal collar 54 of the adjustment member 48 is accessible between the two frontal plates 24 and 26. With the use of a spanner, the assembler turns the adjustment member 48 in the unscrewing sense, so as to move the upper parts of the two frontal plates 24 and 26 apart. He continues this operation until the two sections 18 and 20 are aligned horizontally or even are at a certain obtuse angle corresponding to upward flexion. The best adjustment of the separating means is that in which the two sections 18 and 20 of each longitudinal member are aligned whilst they are supporting the weight of the ribs and the tarpaulin.

Naturally, the prestressed flexion can be adjusted again by rotation of the adjustment member 48, whenever the settling of the framework requires it.

As will be understood, the lower hinging means 28-38 and the upper separating means 42-48 also have the imporant function of being coupling pins which prevent twisting of the longitudinal member, that is, rotation of one of its sections relative to the other about the longitudinal axis.

The section 20 is disconnected from the section 18 by reversing the procedure described, possibly after the adjustment member 48 has been screwed up again to remove the prestressing.

## Claims

1. A device for connecting the ends of two sections of a longitudinal member of a demountable framework for supporting the tarpaulin of the body of a goods vehicle, in which the two sections are supported by removable intermediate uprights and the remote ends of the two sections are supported by end uprights of the framework, characterised in that the adjacent ends of the two sections (18, 20) of the longitudinal member are provided with lower mutual engagement means (28, 38) such as to define a hinge with a horizontal axis between the two sections (18, 20) and are provided with upper adjustable separating means (42, 48) which enable the longitudinal member to be prestressed with an upward flexion centred on the hinge so as to compensate for the downward flexion caused by the weight bearing on the longitudinal member when the latter is supported solely by the end uprights.

2. A device according to Claim 1, characterised in that the separating means comprise an adjustment member (48) which is screwed to one end of one (20) of the sections (18, 20) and can be push-fitted into the adjacent end of the other section (18).

3. A device according to Claim 2, characterised in that the adjustment member (48) has a head (52) shaped like a conical pin and the end of the other section (18) of the longitudinal member has a corresponding conical seat (44) in which the pin (52) is engageable.

4. A device according to Claim 2 or Claim 3, characterised in that the adjustment member (48) has a collar (54) in the form of a nut which is accessible to a spanner in a space between the two adjacent ends of the sections (18, 20).

5. A device according to any one of the preceding claims, characterised in that the mutual engagement means comprise a mushroom-shaped appendage (38) projecting longitudinally from the end of one of the sections (18, 20) and having a stem (36) and an engagement head (40) larger than the stem, and, at the adjacent end of the other section (18), a frontal plate (24) with an essentially keyhole-shaped aperture (28) with an upper enlarged part (30) for allowing the passage of the engagement head (40) and a lower narrow part (32) for housing the stem (36) of the appendage (38).

6. A framework for supporting the tarpaulin of the body of a goods vehicle, including sections of a longitudinal member provided with connection devices according to any one of the preceding claims.

**Patentansprüche**

1. Vorrichtung zur Verbindung der Enden zweier Abschnitte eines Längsteils eines abnehmbaren Tragrahmens zur Stützung der Plane für den Aufbau eines Lastfahrzeuges, wobei die beiden Abschnitte von entfernbaren Zwischenständern getragen werden und die abgelegenen Enden der beiden Abschnitte von Endständern des Tragrahmens getragen werden, dadurch gekennzeichnet, daß die aneinandergrenzenden Enden der beiden Abschnitte (18,20) des Längsteils eine untere Einrichtung (28,38) zur gegenseitigen Einkuppelung, welche zwischen den beiden Abschnitten (18,20) ein Scharnier mit einer horizontalen Achse bildet, und eine obere einstellbare Trenneinrichtung (42,48) aufweisen, welche ermöglicht, daß der Längsteil mit einer auf das Scharnier zentrierten Biegung nach oben vorgespannt wird, um die durch das auf den Längsteil einwirkende Gewicht verursachte Abwärtsbiegung zu kompensieren, wenn der Längsteil nur von den Endständern getragen wird.

2. Vorrichtung nach Anspruch 1, dadurch gekennzeichnet, daß die Trenneinrichtung ein Einstellglied (48) aufweist, welches an ein Ende eines (20) der Abschnitte (18, 20) geschraubt ist und durch Schieben in das angrenzende Ende des anderen Abschnitts (18) eingepaßt werden kann.

3. Vorrichtung nach Anspruch 2, dadurch gekennzeichnet, daß das Einstellglied (48) einen Kopf (52) in der Form eines konischen Stiftes aufweist und daß das Ende des anderen Abschnitts (18) des Längsteils einen entsprechenden konischen Sitz (44), in den der Stift (52) einkuppelbar ist, aufweist.

4. Vorrichtung nach Anspruch 2 oder 3, dadurch gekennzeichnet, daß das Einstellglied (48) einen Stellring (54) in Form einer Mutter aufweist, welche in einem Zwischenraum zwischen zwei aneinanderliegenden Enden der Abschnitte (18, 20) für einen Mutterschlüssel zugänglich ist.

5. Vorrichtung nach einem der vorangegangenen Ansprüche, dadurch gekennzeichnet, daß die Einrichtung zur gegenseitigen Einkuppelung einen pilzförmigen Ansatz (38) aufweist, welcher in Längsrichtung vom Ende eines der Abschnitte (18,20) wegsteht und einen Stiel (36) sowie einen Kupplungskopf (40), der breiter als der Stiel ist, aufweist, und daß am anliegenden Ende des anderen Abschnitts (18) eine Frontplatte (24) mit einer im wesentlichen schlüssellochförmigen Öffnung (28) vorgesehen ist, wobei die Öffnung einen oberen verbreiterten Teil (30) für den Durchgang des Kupplungskopfes (40) und einen unteren schmalen Teil (32) zur Aufnahme des Stiels (36) des Ansatzes (38) aufweist.

6. Tragrahmen zur Stützung der Plane des Aufbaus eines Lastfahrzeuges, dadurch gekennzeichnet, daß Abschnitte eines Längsteils mit Verbindungseinrichtungen nach irgendeinem der vorangegangenen Ansprüche versehen sind.

**Revendications**

1. Dispositif d'assemblage des extrémités de deux sections d'un élément longitudinal d'un châssis démontable servant à porter la bâche de la carrosserie d'un véhicule de marchandises, dans lequel les deux sections sont portées par des montants intermédiaires amovibles et les extrémités extérieures de ces deux sections sont portées par des montants extrêmes du châssis, caractérisé en ce que les extrémités adjacentes des deux sections (18, 20) de l'élément longitudinal sont pourvues de moyens d'accrochage mutuel inférieurs (28, 38) permettant de constituer une articulation, présentant un axe horizontal, entre les deux sections (18, 20) et sont pourvues de moyens supérieurs réglables de séparation (42, 48) qui permettent à l'élément longitudinal d'être précontraint avec une flexion vers le haut centrée sur l'articulation de façon à compenser la flexion vers le bas provoquée par le poids qui s'exerce sur cet élément longitudinal lorsque ce dernier n'est porté que par les montants extrêmes.

2. Dispositif suivant la revendication 1, caractérisé en ce que les moyens de séparation comprennent un élément de réglage (48) qui est vissé sur une extrémité de l'une (20) des sections (18, 20) et peut être emboîté par poussée dans l'extrémité adjacente de l'autre section (18).

3. Dispositif suivant la revendication 2, caractérisé en ce que l'élément de réglage (48) comporte une tête (52) en forme de cheville conique et l'extrémité de l'autre section (18) de l'élément longitudinal comporte un siège conique correspondant (44) dans lequel peut s'engager la cheville (52).

4. Dispositif suivant la revendication 2 ou la revendication 3, caractérisé en ce que l'élément de réglage (48) comporte une collerette (54) en forme d'écrou qui est accessible à une clé de serrage dans un espace existant entre les deux extrémités adjacentes des sections (18, 20).

5. Dispositif suivant l'une quelconque des revendications précédentes, caractérisé en ce que les moyens d'accrochage mutuel comprennent un appendice en forme de champignon (38) faisant saillie dans le sens de la longueur à partir de l'extrémité de l'une des sections (18, 20) et comportant une tige (36) et une tête d'accrochage (40) plus large que cette tige et, à l'extrémité adjacente de l'autre section (18), une plaque frontale (24) comportant une ouverture sensiblement en forme de trou de serrure (28) possédant une partie supérieure plus large (30) permettant le passage de la tête d'accrochage (40) et une partie inférieure plus étroite (32) permettant de loger la tige (36) de l'appendice (38).

6. Châssis destiné à porter la bâche de la carrosserie d'un véhicule de marchandises, comprenant des sections d'un élément longitudinal pourvues de dispositifs d'assemblage suivant l'une quelconque des revendications précédentes.

FIG_1

FIG_2

FIG_4

EP 0 307 370 B1

*FIG_3*

*FIG.5*

*FIG_6*

7